# FASCICULE DE BREVET EUROPEEN

(11) **EP 3 805 036 B1**
(45) Date de publication et mention de la délivrance du brevet: **20.05.2026**
(21) Numéro de dépôt: 20200939.5
(22) Date de dépôt: 09.10.2020
(51) Int. Cl.: B60L 3/00, B60L 7/22

(54) **DISPOSITIF DE FREINAGE À COURANTS DE FOUCAULT**
WIRBELSTROM-BREMSVORRICHTUNG
EDDY-CURRENT BRAKING DEVICE

(30) Priorité: 10.10.2019 FR 1911268
(43) Date de publication de la demande: 14.04.2021
(73) Titulaire: ALSTOM Holdings, 93400 Saint-Ouen-sur-Seine (FR)
(72) Inventeur: BRISOU, Florent, 17540 Fontpatour De Verines (FR); SARTI, Christophe, 17220 Saint Médard d'Aunis (FR); DESCURES, Jean-Marc, 17340 Chatelaillon-Plage (FR)
(74) Mandataire: Plasseraud IP

(56) Documents cités:
- EP-A1- 2 578 435
- EP-A2- 2 033 835
- FR-A- 1 559 729

## Description

La présente invention concerne un véhicule à dispositif de freinage à courants de Foucault. notamment un véhicule de transport public, et plus particulièrement pour un véhicule ferroviaire.

On connait dans l'état de la technique, notamment d'après EP 2 578 435, un dispositif de freinage électrodynamique.

On connait également, dans l'état de la technique, des véhicules de transport public, notamment des véhicules ferroviaires, comportant un dispositif de freinage à courants de Foucault.

Un dispositif de freinage à courants de Foucault est généralement utilisé en tant que dispositif de freinage secondaire, en assistance à un dispositif de freinage mécanique, pour améliorer la puissance de freinage du véhicule, notamment dans le cadre d'un freinage d'urgence.

Un tel dispositif de freinage comporte, pour au moins une roue du véhicule, au moins un rotor formé par un disque conducteur lié en rotation à cette roue, et au moins un stator formé par un électroaimant disposé en regard du disque conducteur. Les électroaimants sont alimentés en énergie électrique, si bien qu'ils génèrent un champ magnétique dans lequel le disque conducteur est en mouvement. Des courants de Foucault sont ainsi induits dans le disque conducteur, générant des forces de Laplace s'opposant au mouvement du disque, donc générant un couple de freinage.

Un tel dispositif de freinage peut aussi comporter, pour au moins un bogie du véhicule, au moins un électro-aimant positionné en regard de chaque rail. Les électroaimants sont alimentés en énergie électrique, si bien qu'ils génèrent un champ magnétique dans lequel le rail est en mouvement. Des courants de Foucault sont ainsi induits dans le rail, générant des forces de Laplace s'opposant au mouvement du train, donc générant un effort longitudinal de freinage.

Dans un tel dispositif de freinage connu, chaque électroaimant est alimenté via un convertisseur dédié, qui permet de moduler le courant circulant dans cet électroaimant, et ainsi de moduler la force de freinage.

L'invention a notamment pour but de proposer un dispositif de freinage moins encombrant et moins onéreux que les dispositifs de freinage connus dans l'état de la technique.

A cet effet, l'invention a notamment pour objet un véhicule selon la revendication 1.

Dans la présente description, une liaison électrique est dite directe lorsqu'elle ne comporte aucun composant électronique susceptible de modifier l'intensité ou la tension du courant électrique. Plus particulièrement, une liaison électrique directe ne comporte que des éléments de liaison électriques, tels que des câbles ou des éléments longiformes équivalents, et éventuellement comporte un interrupteur ou un organe équivalent.

Ainsi, le dispositif de freinage selon l'invention est dépourvu de convertisseur.

Il en résulte un gain en encombrement (nulle nécessité de prévoir un emplacement pour le convertisseur), et un gain économique (nulle nécessité d'un convertisseur onéreux).

Les inventeurs ont en effet constaté que, de manière surprenante, l'efficacité du freinage reste élevée malgré l'absence de convertisseur. Un inconvénient serait qu'il n'est plus possible de moduler l'intensité du freinage, mais cela n'est pas pénalisant lorsque l'on souhaite une intensité de freinage maximale, par exemple pour un freinage d'urgence.

Des caractéristiques optionnelles du véhicule sont définies aux revendications 2 à 8.

Différents aspects et avantages de l'invention seront mis en lumière dans la description qui va suivre, donnée uniquement à titre d'exemple et faite en se référant aux figures annexées, dans lesquelles :
- La figure 1 représente schématiquement un véhicule ferroviaire comprenant un dispositif de freinage selon un exemple de mode de réalisation de l'invention, et
- La figure 2 représente schématiquement un détail du dispositif de freinage équipant le véhicule ferroviaire de la figure 1.

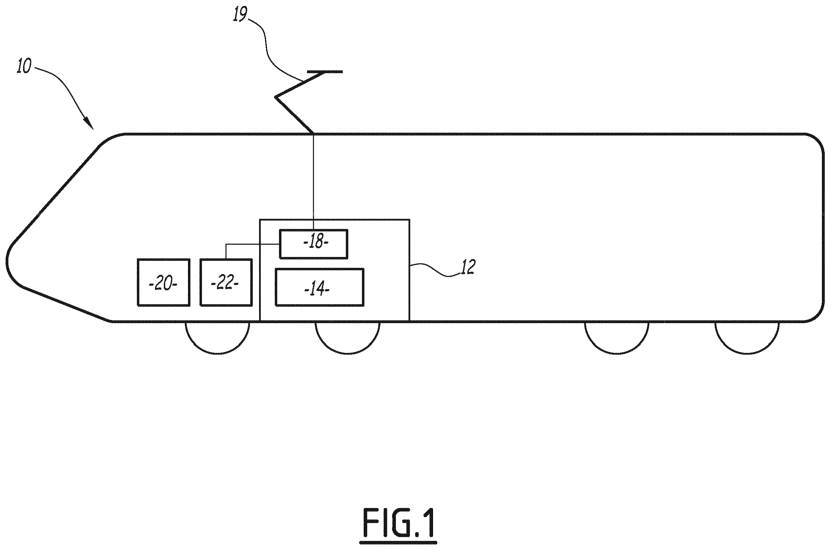

On a représenté, sur la figure 1, un véhicule 10, selon un exemple de mode de réalisation de l'invention. Le véhicule 10 est de préférence un véhicule de transport public 10, et de manière préférée un véhicule ferroviaire. Par exemple, le véhicule est un Train à Grande Vitesse, un métro, un tramway, ou tout autre véhicule envisageable (autre véhicule ferroviaire, bus, autocar, poids lourd, etc.).

Le véhicule 10 comporte un dispositif de traction 12, comprenant des moyens 14 de motorisation d'au moins une roue 16, et plus particulièrement d'au moins un essieu portant deux roues 16.

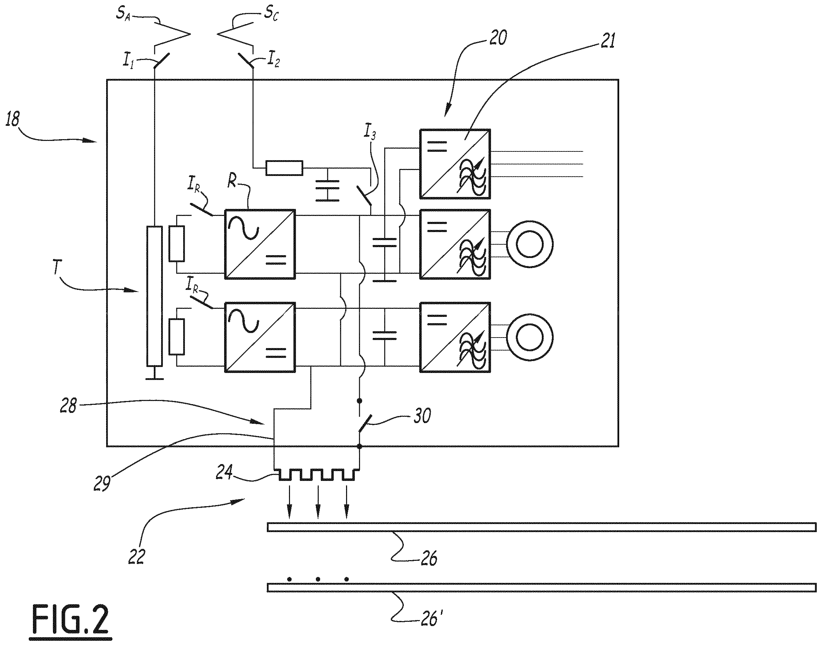

Les moyens de motorisation 14 sont alimentés en énergie électrique via un bus d'alimentation 18 de type classique, représenté plus en détail sur la figure 2. L'énergie électrique provient d'une source d'énergie électrique, par exemple une source d'énergie électrique extérieure, telle qu'une caténaire ou un rail électrifié, dont l'énergie est captée par un organe de captage du véhicule, tel qu'un pantographe 19 ou un patin électrique. En variante, ou de manière complémentaire, le véhicule comporte des moyens de stockage d'énergie électrique, qui forment la source d'énergie électrique.

Dans le mode de réalisation présenté à la figure 2 une source d'énergie électrique alternative S_{A} (liée au pantographe 19) et une source d'énergie électrique continue S_{C} sont représentées, ainsi que deux interrupteurs I1 et I₂ propres respectivement à relier le bus d'alimentation 18 à la source d'énergie électrique alternative S_{A} et à la source d'énergie électrique continue S_{C}.

Avantageusement, le bus d'alimentation 18 comprend au moins un redresseur R, destiné à convertir l'énergie électrique reçue via la source d'énergie électrique alternative S_{A} en un courant continu.

Le bus d'alimentation 18 comprend par ailleurs un transformateur T, du côté de la source d'énergie électrique alternative.

De préférence, le bus d'alimentation 18 comprend au moins deux redresseurs R, chacun connecté au transformateur T via un interrupteur I_{R} respectif.

Avantageusement, le bus d'alimentation 19 comprend également un interrupteur I₃ en aval de la source continue.

Le bus d'alimentation 18 comporte généralement au moins un onduleur 21 destiné à convertir le courant continu en un courant alternatif propre à alimenter les moyens de motorisation 14, connectés à cet onduleur 21 en aval de cet onduleur 21.

Le véhicule ferroviaire 10 comporte généralement un dispositif de freinage primaire 20, permettant un freinage mécanique des roues 16. Un tel dispositif de freinage primaire 20 est classique et ne sera donc pas décrit plus en détail.

Le véhicule ferroviaire 10 selon l'invention comporte en outre un dispositif de freinage secondaire 22 à courants de Foucault.

Le dispositif de freinage 22 comporte au moins un stator formé par au moins un électroaimant 24, et au moins un élément en mouvement, par exemple un rotor formé par au moins un disque conducteur 26, ou un rail 26'.

Le disque conducteur 26 est lié en rotation à au moins l'une des roues 16. Chaque essieu porte par exemple au moins l'un des disques conducteurs 26.

Le rail 26' supporte au moins l'une des roues 16. Ce rail 26' est considéré « en mouvement » car en mouvement dans un référentiel lié au véhicule ferroviaire.

Chaque électroaimant 24 est agencé en regard de l'un respectif des disques conducteurs 26. Ainsi, chaque disque conducteur 26 est mobile en rotation à proximité d'au moins un électroaimant 24.

En variante, chaque électroaimant 24 est agencé en regard de l'un respectif des rails 26'. Ainsi, chaque rail 26' est mobile en translation à proximité d'au moins un électroaimant 24.

Lorsque les électroaimants 24 sont alimentés en énergie électrique, ils génèrent un champ magnétique dans lequel le disque conducteur 26 ou le rail 26' est en mouvement. Des courants de Foucault sont alors induits dans le disque conducteur 26 ou le rail 26', ce qui a pour effet de générer des forces de Laplace s'opposant au mouvement du disque 26 ou du rail 26', donc de générer un couple de freinage ou un effort longitudinal de freinage.

Afin d'alimenter les électroaimants 24 en énergie électrique, chaque électroaimant 24 est relié au bus d'alimentation 18 par des moyens de liaison électrique directe 28.

On rappelle que des moyens de liaison électrique directe sont dépourvus de composants électroniques autres que des éléments de liaison électrique 29 (tels que des câbles) et des interrupteurs. Les moyens de liaison électrique directe 28 sont ainsi dépourvus de tout composant électronique susceptible de modifier le courant électrique, et sont donc notamment dépourvus de convertisseur.

De préférence, les moyens de liaison électrique directe 28 comportent un interrupteur 30. Lorsque l'interrupteur 30 est fermé, l'électroaimant 24 est en communication électrique directe, sans autre intermédiaire que les éléments de liaison électrique 29, avec le bus d'alimentation 18. Lorsque l'interrupteur 30 est ouvert, l'électroaimant 24 n'est pas alimenté en courant électrique, et il ne génère donc pas de champ magnétique : le dispositif de freinage secondaire 22 est désactivé.

L'interrupteur 30 est commandé à distance, manuellement par un conducteur du véhicule 10, ou automatiquement, par exemple dans le cadre d'un freinage d'urgence.

L'électroaimant 24 est de préférence alimenté en courant continu. A cet effet, il est connecté par l'intermédiaire du bus d'alimentation 18 et de la liaison électrique directe 28 à la source d'énergie électrique alternative S_{A}, via le redresseur R, ou à la source d'énergie électrique continue S_{C}, en fonction de la position des interrupteurs I1 et I₂.

Plus particulièrement, les moyens de liaison électrique directe 28 sont connectés au bus d'alimentation 18 lorsque celui-ci est parcouru par un courant continu, c'est-à-dire entre le redresseur R et l'onduleur 21 dans le mode de réalisation de la figure 2. Lorsque la source d'énergie électrique est la source d'énergie électrique continue S_{C}, les moyens de liaison électrique directe 28 et donc l'électroaimant sont connectés à la source d'énergie électrique continue en parallèle de chaque onduleur 21.

On notera que le dispositif de freinage secondaire 22 est lié à un dispositif de traction 12 respectif, de sorte que le disque conducteur 26 ou le rail 26' est relié à la roue 16 de ce dispositif de traction et l'électroaimant 24 est connecté au bus d'alimentation 18 de ce même dispositif de traction 12.

Ainsi, quand le véhicule 10 comporte une pluralité de dispositifs de traction 12, chaque dispositif de traction 12 peut être associé à un dispositif de freinage secondaire 22 respectif.

On notera que l'invention n'est pas limitée au mode de réalisation précédemment décrit, mais pourrait présenter d'autre variantes.

## Revendications

1. Véhicule (10), notamment véhicule de transport public, par exemple véhicule ferroviaire, comportant un dispositif de traction (12) alimenté électriquement via un bus d'alimentation (18), un dispositif de freinage principal (20), à freinage mécanique et/ou électrique, et un dispositif (22) de freinage à courants de Foucaultformant un dispositif de freinage secondaire distinct du dispositif de freinage principal (20), le dispositif de freinage à courants de Foucault (22) comprenant au moins un stator formé par au moins un électroaimant (24), au moins un élément mobile (26, 26') en mouvement dans un référentiel lié au véhicule (10), et des moyens (28) de liaison électrique directe entre chaque électroaimant (24) et le bus d'alimentation (18) du dispositif de traction (12) du véhicule (10).

2. Véhicule (10) selon la revendication 1, dans lequel les moyens de liaison électrique directe (28) comportent uniquement un interrupteur et des éléments de liaison électrique (29), notamment des câbles électriques.

3. Véhicule (10) selon la revendication 1 ou 2, dans lequel le bus d'alimentation est un bus d'alimentation en courant continu.

4. Véhicule (10) selon l'une quelconque des revendications précédentes, dans lequel le bus d'alimentation (18) comporte un onduleur (21), chaque électroaimant (24) étant connecté au bus d'alimentation (18) en amont de cet onduleur (20), de sorte que l'électroaimant (24) est alimenté en courant continu.

5. Véhicule (10) selon l'une quelconque des revendications précédentes, dans lequel l'élément mobile (26) est formé par un rotor comprenant au moins un disque conducteur (26), chaque disque conducteur (26) étant destiné à être lié en rotation à une roue (16) du véhicule (10).

6. Véhicule (10) selon la revendication 5, dans lequel le dispositif de traction (12) entraine au moins une roue (16) en rotation, le dispositif de freinage à courants de Foucault (22) étant associé à un dispositif de traction (12) respectif, de sorte que le disque conducteur (26) est relié à la roue (16) de ce dispositif de traction (12), et l'électroaimant (24) est connecté au bus d'alimentation (18) de ce même dispositif de traction (12).

7. Véhicule (10) selon l'une quelconque des revendications 1 à 4, dans lequel l'élément mobile (26) est formé par un rail (26'), chaque rail (26') étant destiné à supporter une roue (16) du véhicule (10).

8. Véhicule (10) selon la revendication 7, dans lequel le dispositif de traction (12) entraine au moins une roue (16) en rotation, le dispositif de freinage à courants de Foucault (22) étant associé à un dispositif de traction (12) respectif, de sorte que le rail (26') supporte la roue (16) de ce dispositif de traction (12), et l'électroaimant (24) est connecté au bus d'alimentation (18) de ce même dispositif de traction (12).

## Patentansprüche

1. Fahrzeug (10), insbesondere öffentliches Verkehrsmittel, z. B. Schienenfahrzeug, umfassend eine über einen Versorgungsbus (18) elektrisch gespeiste Traktionsvorrichtung (12), eine Hauptbremsvorrichtung (20) mit mechanischer und/oder elektrischer Bremsung und eine Wirbelstrombremsvorrichtung (22) umfasst, die eine von der Hauptbremsvorrichtung (20) getrennte Nebenbremsvorrichtung bildet, wobei die Wirbelstrombremsvorrichtung (22) wenigstens einen Stator, der durch wenigstens einen Elektromagneten (24) gebildet wird, wenigstens ein bewegliches Element (26, 26'), das sich in einem mit dem Fahrzeug (10) verbundenen Bezugssystem bewegt, und Mittel (28) zur direkten elektrischen Verbindung zwischen jedem Elektromagneten (24) und dem Versorgungsbus (18) der Traktionsvorrichtung (12) des Fahrzeugs (10).

2. Fahrzeug (10) nach Anspruch 1, wobei die Mittel zur direkten elektrischen Verbindung (28) lediglich einen Schalter und elektrische Verbindungselemente (29), insbesondere elektrische Kabel, umfassen.

3. Fahrzeug (10) nach Anspruch 1 oder 2, wobei der Versorgungsbus ein Gleichstrom-Versorgungsbus ist.

4. Fahrzeug (10) nach einem der vorstehenden Ansprüche, wobei der Versorgungsbus (18) einen Wechselrichter (21) umfasst, wobei jeder Elektromagnet (24) stromaufwärts dieses Wechselrichters (20) mit dem Versorgungsbus (18) verbunden ist, so dass der Elektromagnet (24) mit Gleichstrom versorgt wird.

5. Fahrzeug (10) nach einem der vorstehenden Ansprüche, wobei das bewegliche Element (26) durch einen Rotor gebildet ist, der wenigstens eine leitende Scheibe (26) umfasst, wobei jede leitende Scheibe (26) dazu bestimmt ist, drehbar mit einem Rad (16) des Fahrzeugs (10) verbunden zu sein.

6. Fahrzeug (10) nach Anspruch 5, wobei die Traktionsvorrichtung (12) wenigstens ein Rad (16) in Drehung versetzt, wobei die Wirbelstrombremsvorrichtung (22) einer jeweiligen Traktionsvorrichtung (12) zugeordnet ist, so dass die leitende Scheibe (26) mit dem Rad (16) dieser Traktionsvorrichtung (12) verbunden ist und der Elektromagnet (24) an den Versorgungsbus (18) derselben Traktionsvorrichtung (12) verbunden ist.

7. Fahrzeug (10) nach einem der Ansprüche 1 bis 4, wobei das bewegliche Element (26) durch eine Schiene (26') gebildet ist, wobei jede Schiene (26') dazu bestimmt ist, ein Rad (16) des Fahrzeugs (10) zu tragen.

8. Fahrzeug (10) nach Anspruch 7, wobei die Traktionsvorrichtung (12) wenigstens ein Rad (16) in Drehung versetzt, wobei die Wirbelstrombremsvorrichtung (22) einer jeweiligen Traktionsvorrichtung (12) zugeordnet ist, so dass die Schiene (26') das Rad (16) dieser Traktionsvorrichtung (12) trägt, und der Elektromagnet (24) mit dem Versorgungsbus (18) derselben Traktionsvorrichtung (12) verbunden ist.

## Claims

1. Vehicle (10), in particular public transport vehicle, for example rail vehicle, comprising a traction device (12) electrically powered via a power supply bus (18), a main braking device (20), with mechanical and/or electrical braking, and an eddy current braking device (22) forming a secondary braking device separate from the main braking device (20), the eddy current braking device (22) comprising at least one stator formed by at least one electromagnet (24), at least one movable element (26, 26') moving in a reference frame linked to the vehicle (10), and means (28) for direct electrical connection between each electromagnet (24) and the power supply bus (18) of the traction device (12) of the vehicle (10).

2. Vehicle (10) according to claim 1, wherein the direct electrical connection means (28) comprise only a switch and electrical connection elements (29), in particular electrical cables.

3. Vehicle (10) according to claim 1 or 2, wherein the power supply bus is a DC power supply bus.

4. Vehicle (10) according to any one of the preceding claims, wherein the power supply bus (18) comprises an inverter (21), each electromagnet (24) being connected to the power supply bus (18) upstream of this inverter (20), such that the electromagnet (24) is supplied with direct current.

5. Vehicle (10) according to any one of the preceding claims, wherein the movable element (26) is formed by a rotor comprising at least one conductive disc (26), each conductive disc (26) being intended to be rotatably connected to a wheel (16) of the vehicle (10).

6. Vehicle (10) according to claim 5, wherein the traction device (12) drives at least one wheel (16) in rotation, the eddy current braking device (22) being associated with a respective traction device (12) so that the conductive disk (26) is connected to the wheel (16) of this traction device (12), and the electromagnet (24) is connected to the power supply bus (18) of this same traction device (12).

7. Vehicle (10) according to any one of claims 1 to 4, wherein the movable element (26) is formed by a rail (26'), each rail (26') being intended to support a wheel (16) of the vehicle (10).

8. Vehicle (10) according to claim 7, wherein the traction device (12) drives at least one wheel (16) in rotation, the eddy current braking device (22) being associated with a respective traction device (12) so that the rail (26') supports the wheel (16) of this traction device (12), and the electromagnet (24) is connected to the power supply bus (18) of this same traction device (12).
